# EUROPEAN PATENT APPLICATION

(11) **EP 4 692 148 A1**
(43) Date of publication of application: **11.02.2026**
(21) Application number: 24784727.0
(22) Date of filing: 21.03.2024
(51) Int. Cl.: C08G 18/22, C08G 18/20, C08G 18/62, C08G 18/72

(54) **CURABLE COMPOSITION AND CURED PRODUCT OF SAME**

(30) Priority: 04.04.2023 JP 2023060675
(71) Applicant: DIC Corporation, Tokyo 174-8520 (JP)
(72) Inventor: DOHI, Kenta, Takaishi-shi, Osaka 592-0001 (JP); YAMADA, Shunsuke, Sakura-shi, Chiba 285-8668 (JP); KON, Yoshihiro, Tsukuba-shi, Ibaraki 305-8560 (JP); YADA, Akira, Tsukuba-shi, Ibaraki 305-8560 (JP)
(74) Representative: TBK
(86) International application number: PCT/JP2024/010921
(87) International publication number: WO 2024/209936

(57) **Abstract**

Provided is a curable composition containing an acrylic polymer (A) having a hydroxy group, a polyisocyanate compound (B), and a curing catalyst (C), in which the curing catalyst (C) is derived from a bismuth compound (c1) and an amidine compound (c2), the content of the curing catalyst (C) is 0.05 to 0.8% by mass relative to the copolymer (A), and the molar ratio (c1/c2) of the bismuth compound (c1) to the amidine compound (c2) is 0.025 to 0.5. The curable composition has a long usable time and excellent curability and can form a cured product with excellent solvent resistance and hot water resistance. Thus, the curable composition can be suitably used for various coating materials for automotive interiors and exteriors, automobile repairs, plastics, films, industrial machines, building materials, and wood floor, and in-mold coating applications in which molding of a material such as plastic and coating are performed simultaneously in the same mold.

## Description

### Technical Field

The present invention relates to a curable composition and a cured product of the same.

### Background Art

Conventionally, two-component urethane coating materials that combine a resin having a hydroxy group and a polyisocyanate compound have been used for various applications such as automotive interiors and exteriors, automobile repairs, plastics, industrial machines, and building materials. Organotin compounds have been used as catalysts in these coating materials to promote the reaction between hydroxy groups and isocyanate groups, but reduction in the usable time and the effects of organotin compounds on the human body have been problems.

Under these circumstances, a curable composition has been proposed to achieve both usable time and curability (see, for example, PTL 1). This curable composition contains a resin having a hydroxy group, a polyisocyanate compound, and a quaternary ammonium carboxylate as a curing accelerator. However, in applications requiring better coating film properties, there has been a problem of maintaining a balance between usable time and coating film properties.

### Citation List

### Patent Literature

PTL 1: Japanese Patent No. 3867879

### Summary of Invention

### Technical Problem

An object of the present invention is to provide a curable composition that has a long usable time and can form a cured product with excellent curability and solvent resistance.

### Solution to Problem

The present inventors have intensively studied to achieve the object and found that a curable composition containing an acrylic polymer having a hydroxy group, a polyisocyanate compound, and a specific curing catalyst can be used to provide a long usable time and form a cured product with excellent curability and solvent resistance. This finding has led to completion of the invention.

Specifically, the present invention relates to a curable composition containing an acrylic polymer (A) having a hydroxy group, a polyisocyanate compound (B), and a curing catalyst (C), in which the curing catalyst (C) is derived from a bismuth compound (c1) and an amidine compound (c2), the content of the curing catalyst (C) is 0.05 to 0.8% by mass relative to the copolymer (A), and the molar ratio (c1/c2) of the bismuth compound (c1) to the amidine compound (c2) is 0.025 to 0.5.

### Advantageous Effects of Invention

The curable composition of the present invention has a long usable time and excellent curability and can form a cured product with excellent solvent resistance and hot water resistance. Thus, the curable composition can be suitably used for various coating materials for automotive interiors and exteriors, automobile repairs, plastics, films, industrial machines, building materials, and wood floor, and in-mold coating applications in which molding of a material such as plastic and coating are performed simultaneously in the same mold.

### Description of Embodiments

The curable composition of the present invention is a curable composition containing an acrylic polymer (A) having a hydroxy group, a polyisocyanate compound (B), and a curing catalyst (C), in which the curing catalyst (C) is derived from a bismuth compound (c1) and an amidine compound (c2), the content of the curing catalyst (C) is 0.05 to 0.8% by mass relative to the copolymer (A), and the molar ratio (c1/c2) of the bismuth compound (c1) to the amidine compound (c2) is 0.025 to 0.5.

The acrylic polymer (A) having a hydroxy group has two or more hydroxy groups and is obtained, for example, by copolymerizing an acrylic monomer (a1) having a hydroxy group and another monomer (a2).

Examples of the acrylic monomer (a1) having a hydroxy group include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, N-(2-hydroxyethyl) (meth)acrylamide, glycerol mono(meth)acrylate, polyethylene glycol mono(meth)acrylate, polypropylene glycol mono(meth)acrylate, 2-hydroxy-3-phenoxypropyl (meth)acrylate, 2-(meth)acryloyloxyethyl-2-hydroxyethyl phthalate, and lactone-modified (meth)acrylate having a hydroxy group at an end. The acrylic monomers (a1) having a hydroxy group may be used alone, or two or more types thereof may be used in combination.

Examples of the other monomer (a2) include monomers having a carboxy group, such as unsaturated monocarboxylic acids, such as (meth)acrylic acid, crotonic acid, β-carboxyethyl (meth)acrylate, ω-carboxy-polycaprolactone mono(meth)acrylate, 2-(meth)acryloyloxyethyl succinate, and 2-(meth)acryloyloxyethyl hexahydrophthalate, and unsaturated dicarboxylic acids such as maleic acid, fumaric acid, and itaconic acid, or half esters of the unsaturated dicarboxylic acids; methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, tridecyl (meth)acrylate, cetyl (meth)acrylate, stearyl (meth)acrylate, behenyl (meth)acrylate, cyclohexyl (meth)acrylate, 4-tert-butylcyclohexyl (meth)acrylate, isobornyl (meth)acrylate, dicyclopentanyl (meth)acrylate, benzyl (meth)acrylate, acrylamide, N,N-dimethyl (meth)acrylamide, (meth)acrylonitrile, 3-(meth)acryloylpropyltrimethoxysilane, N,N-dimethylaminoethyl (meth)acrylate, glycidyl (meth)acrylate, 2-(meth)acryloyloxyethyl acid phosphate, styrene, α-methylstyrene, p-methylstyrene, and p-methoxystyrene. The monomers may be used alone, or two or more types thereof may be used in combination.

In the present invention, "(meth)acrylic acid" refers to one or both of methacrylic acid and acrylic acid, "(meth)acrylate" refers to one or both of methacrylate and acrylate, and "(meth)acryloyl" refers to one or both of methacryloyl and acryloyl.

As a method for producing the polymer (A), a known polymerization method using as raw materials the monomer (a1) having a hydroxy group and the other monomer (a2) can be carried out, and a solution radical polymerization method is preferred because it is the simplest.

The solution radical polymerization method is a method in which each monomer as a raw material is dissolved in a solvent and a polymerization reaction is performed in the presence of a polymerization initiator. Examples of the solvent that can be used in this case include hydrocarbon solvents, such as toluene, xylene, cyclohexane, n-hexane, and octane; alcohol solvents, such as methanol, ethanol, iso-propanol, n-butanol, iso-butanol, sec-butanol, and ethylene glycol monomethyl ether; ester solvents, such as methyl acetate, ethyl acetate, n-butyl acetate, isobutyl acetate, and amyl acetate; and ketone solvents, such as acetone, methyl ethyl ketone, methyl isobutyl ketone, and cyclohexanone. The solvents may be used alone, or two or more types thereof may be used in combination.

Examples of the polymerization initiator that can be used in production of the polymer (A) include azo compounds, such as 2,2'-azobis(isobutylonitrile), 2,2'-azobis(2-methylbutyronitrile), and azobiscyanovaleric acid; organic peroxides, such as tert-butyl peroxypivalate, tert-butyl peroxybenzoate, tert-butyl peroxy-2-ethylhexanoate, di-tert-butyl peroxide, cumene hydroperoxide, benzoyl peroxide, and tert-butyl hydroperoxide; and inorganic peroxides, such as hydrogen peroxide, ammonium persulfate, potassium persulfate, and sodium persulfate. The polymerization initiators may be used alone, or two or more types thereof may be used in combination. In addition, the polymerization initiator is preferably used in an amount of 0.1 to 15% by mass based on the total of the monomers as the raw materials for the polymer (A).

With the polymerization initiator, if necessary, a chain transfer agent, such as lauryl mercaptan, octylmercaptan, 2-mercaptoethanol, octyl thioglycollate, 3-mercaptopropionic acid, or α-methylstyrene dimer may also be used.

The acid value of the polymer (A) is preferably 15 mg KOH/g or less since the balance of usable time and curability is more improved.

The hydroxyl value of the polymer (A) is preferably 30 to 150 mg KOH/g since the balance of usable time and curability is more improved.

The acid value and the hydroxyl value of the acrylic polymer in the present invention are values measured in accordance with JIS K 0070-1992 Test Method.

The weight average molecular weight (Mw) of the copolymer (A) is preferably 3,000 to 30,000. Here, the weight average molecular weight (Mw) is a value calculated in terms of polystyrene by gel permeation chromatography (hereinafter referred to as "GPC") measurement.

Examples of the polyisocyanate compound (B) include aromatic diisocyanate compounds, such as tolylene diisocyanate, diphenylmethane diisocyanate, m-xylylene diisocyanate, and m-phenylene bis(dimethylmethylene) diisocyanate; and aliphatic or alicyclic diisocyanate compounds, such as hexamethylene diisocyanate, lysine diisocyanate, 1,3-bis(isocyanatomethyl)cyclohexane, **2-**methyl-1,3-diisocyanatocyclohexane, 2-methyl-1,5-diisocyanatocyclohexane, 4,4'-dicyclohexylmethane diisocyanate, and isophorone diisocyanate.

As the polyisocyanate compound (B), a prepolymer having an isocyanate group obtained by an addition reaction of the diisocyanate compound with a polyhydric alcohol; a compound having an isocyanurate ring obtained by cyclization and trimerization of the diisocyanate compound; a polyisocyanate compound having a urea bond or a biuret bond obtained by a reaction of the diisocyanate compound with water; a homopolymer of an acrylic monomer having an isocyanate group, such as 2-isocyanatoethyl (meth)acrylate, 3-isopropenyl-α,α-dimethylbenzyl isocyanate, or (meth)acryloyl isocyanate; a copolymer having an isocyanate group obtained by copolymerization of the acrylic monomer having an isocyanate group with a monomer, such as another acrylic monomer, a vinyl ester compound, a vinyl ether compound, an aromatic vinyl monomer, or fluoroolefin; or the like may be used.

The polyisocyanate compounds (B) can be used alone, or two or more types thereof may be used in combination. It is preferable to include a compound having three or more isocyanate groups in a molecule since curability, hardness, and solvent resistance are more improved.

The curing catalyst (C) is derived from a bismuth compound (c1) and an amidine compound (c2). Examples of the bismuth compound (c1) include fatty acid bismuth complexes, such as bismuth 2-ethylhexanoate, bismuth neodecanoate, bismuth stearate, and bismuth oleate; bismuth halide, bismuth phosphate, bismuth nitrate, and bismuth sulfate. In terms of coloration, reactivity, and solubility in solvents and resins, fatty acid bismuth complexes are preferred, fatty acid bismuth complexes with 7 to 15 carbon atoms are more preferred, and bismuth 2-ethylhexanoate is especially preferred. The bismuth compounds (C) may be used alone, or two or more types thereof may be used in combination.

Examples of the amidine compound (c2) include pyrimidine compounds, such as pyrimidine, 2-aminopyrimidine, 6-amino-2,4-dimethylpyrimidine, 2-amino-4,6-dimethylpyrimidine, and 1,4,5,6-tetrahydropyrimidine; imidazoline compounds, such as 2-imidazoline, 2-methyl-2-imidazoline, 2-ethyl-2-imidazoline, and 2-propyl-2-imidazoline; bicyclic amidine compounds, such as 1,8-diazabicyclo[5.4.0]undeca-7-ene (hereinafter abbreviated as "DBU"), 1,5-diazabicyclo[4.3.0]nona-5-ene (hereinafter abbreviated as "DBN"), 2,9-diazabicyclo[4.3.0]nona-1,3,5,7-tetraene, and 6-(dibutylamino)-1,8-diazabicyclo[5,4,0]undecen-7; and guanidine compounds, such as guanidine, dicyandiamide, 1-methylguanidine, 1-ethylguanidine, 1-cyclohexylguanidine, 1-phenylguanidine, 1,5,7-triazabicyclo[4.4.0]deca-5-ene, 7-methyl-1,5,7-triazabicyclo[4.4.0]deca-5-ene, 7-ethyl-1,5,7-triazabicyclo[4.4.0]deca-5-ene, 7-n-propyl-1,5,7-triazabicyclo[4.4.0]deca-5-ene, 7-isopropyl-1,5,7-triazabicyclo[4.4.0]deca-5-ene, 7-n-butyl-1,5,7-triazabicyclo[4.4.0]deca-5-ene, 7-cyclohexyl-1,5,7-triazabicyclo[4.4.0]deca-5-ene, and 7-n-octyl-1,5,7-triazabicyclo[4.4.0]deca-5-ene. Among these, amidine compounds having a bicyclic structure are more preferred since the balance between usable time, solvent resistance, and curability is more improved, and DBU and DBN, which are industrially readily available, are even more preferred. The amidine compounds (c2) may be used alone, or two or more types thereof may be used in combination.

In the curable composition of the present invention, the equivalent ratio (NCO/OH) of the isocyanate group (NCO) of the polyisocyanate compound (B) to the hydroxy group (OH) of the polymer (A) is preferably 0.2 to 2, and more preferably 0.5 to 1.5 since the balance between usable time, solvent resistance, and curability is more improved.

The content of the curing catalyst (C) in the curable composition of the present invention is 0.025 to 0.8% by mass relative to the polymer (A), and more preferably 0.1 to 0.5% by mass since the balance between usable time, solvent resistance, and curability is more improved.

The molar ratio (c1/c2) of the bismuth compound (c1) to the amidine compound (c2) is 0.025 to 0.1, and preferably 0.03 to 0.2 since the balance between usable time, solvent resistance, and curability is more improved.

The curable composition of the present invention is one containing the acrylic polymer (A), the polyisocyanate compound (B), and the curing catalyst (C), and as another blend, an inorganic pigment, an organic pigment, an extender pigment, a colored pigment, a high-gloss pigment, a cellulose derivative, a wax, a surfactant, a stabilizer, a flow modifier, a dye, a leveling agent, a rheology control agent, an ultraviolet absorber, an antioxidant, a plasticizer, an antistat, an antifoaming agent, a viscosity modifier, a light resistance stabilizer, a weather resistance stabilizer, a heat resistance stabilizer, a pigment dispersant, or the like may be used.

The curable composition of the present invention can easily form a cured product such as a cured coating film and a molded product because of a long usable time and excellent curability.

A method for forming the cured product can be selected according to various applications. Examples of the method include a method in which the curable composition is applied to a substrate and then cured at 25 to 150°C and a method in which the curable composition is poured into a molding die and then cured at 60 to 150°C.

A method for applying the curable composition of the present invention depends on an article to be coated, and examples thereof include methods by a gravure coater, a roll coater, a comma coater, a knife coater, an air knife coater, a curtain coater, a kiss coater, a shower coater, a wheel coater, a spin coater, dipping, screen printing, spraying, an applicator, a bar coater, and brushing.

Further, the curable composition of the present invention can be diluted with an organic solvent to adjust the coating material to a viscosity suitable for the coating method. Examples of this organic solvent include aromatic hydrocarbon solvents, such as toluene and xylene; alcohol solvents, such as methanol, ethanol, isopropanol, t-butanol, propylene glycol monomethyl ether, propylene glycol n-propyl ether, ethylene glycol monobutyl ether, and diacetone alcohol; ester solvents, such as ethyl acetate, butyl acetate, isobutyl acetate, n-propyl acetate, propylene glycol monomethyl ether acetate, and ethyl 3-ethoxypropionate; and ketone solvents, such as methyl ethyl ketone, methyl isobutyl ketone, diisobutyl ketone, and cyclohexanone. The solvents may be used alone, or two or more types thereof may be used in combination.

The curable composition of the present invention can form a cured coating film having excellent appearance and coating film physical properties on the surface of various articles, and thus can be suitably used as a coating material.

Examples of an article having a cured coating film formed using the curable composition of the present invention include interior and exterior materials of various vehicles such as an automobile and a railway vehicle; interior and exterior materials of industrial machines and architectures such as an exterior wall, a roof, glass, a decorative laminated sheet, and wood floor; civil engineering members such as a sound-proof wall and a drainage ditch; casings for household electrical appliances such as a television, a refrigerator, a laundry machine, and an air conditioner; casings for electronic devices such as a personal computer, a smartphone, a cellular phone, a digital camera, and a game console; and casings for OA equipment such as a printer and a facsimile.

### [Examples]

Hereinafter, the present invention will be described in detail with reference to specific examples. The acid value and the hydroxyl value of the acrylic polymer were measured in accordance with JIS K 0070-1992 Test Method, and the weight average molecular weight (Mw) was measured under the following GPC measurement conditions.

### [GPC Measurement Conditions]

Measuring apparatus: high-speed GPC device ("HLC-8220GPC" manufactured by TOSOH CORPORATION)
Column: the following columns manufactured by TOSOH CORPORATION were connected in series for use.
   "TSKgel G5000" (7.8 mm I.D. × 30 cm) × 1
   "TSKgel G4000" (7.8 mm I.D. × 30 cm) × 1
   "TSKgel G3000" (7.8 mm I.D. × 30 cm) × 1
   "TSKgel G2000" (7.8 mm I.D. × 30 cm) × 1
Detector: RI (differential refractometer)
Column temperature: 40°C
Eluent: tetrahydrofuran (THF)
Flow rate: 1.0 mL/min
Injection volume: 100 µL (tetrahydrofuran solution in which the sample concentration was 4 mg/mL)
Standard sample: a standard curve was created using each of the following monodisperse polystyrenes.

### (Monodisperse Polystyrenes)

"TSKgel standard polystyrene A-500" available from TOSOH CORPORATION
"TSKgel standard polystyrene A-1000" available from TOSOH CORPORATION
"TSKgel standard polystyrene A-2500" available from TOSOH CORPORATION
"TSKgel standard polystyrene A-5000" available from TOSOH CORPORATION
"TSKgel standard polystyrene F-1" available from TOSOH CORPORATION
"TSKgel standard polystyrene F-2" available from TOSOH CORPORATION
"TSKgel standard polystyrene F-4" available from TOSOH CORPORATION
"TSKgel standard polystyrene F-10" available from TOSOH CORPORATION
"TSKgel standard polystyrene F-20" available from TOSOH CORPORATION
"TSKgel standard polystyrene F-40" available from TOSOH CORPORATION
"TSKgel standard polystyrene F-80" available from TOSOH CORPORATION
"TSKgel standard polystyrene F-128" available from TOSOH CORPORATION
"TSKgel standard polystyrene F-288" available from TOSOH CORPORATION
"TSKgel standard polystyrene F-550" available from TOSOH CORPORATION

### (Synthesis Example 1: Synthesis of Acrylic Polymer (A-1) Having Hydroxy Group)

Into a flask equipped with a condenser, a thermometer, a dropping funnel, and a stirrer, 263.0 parts by mass of butyl acetate was placed, and the inner temperature was increased to 125°C. Next, a mixture of 350.0 parts by mass of styrene, 140.0 parts by mass of methyl methacrylate, 150.0 parts by mass of n-butyl methacrylate, 350.0 parts by mass of 2-hydroxyethyl methacrylate, 10.0 parts by mass of methacrylic acid, 80.0 parts by mass of n-butyl acetate, and 100.0 parts by mass of t-butyl peroxy-2-ethylhexanoate was added dropwise over 4 hours. After that, a polymerization reaction was performed for 17 hours while the inner temperature was maintained at 120°C. Then, butyl acetate was additionally fed to obtain a solution of acrylic polymer (A-1) having a hydroxy group with a non-volatile content of 75% by mass. The weight average molecular weight of the polymer was 4,500.

### (Preparation Example 1: Preparation of Curing Catalyst (C-1))

To a 20-mL sample tube, 1.1 g of DICNATE 425 (DIC Corporation, bismuth 2-ethylhexanoate, metal content = 25%) and 2.0 g of DBU were added and stirred at 25°C for 2 hours using a stirrer to obtain a curing catalyst (C-1). The molar ratio (c1/c2) was 0.1.

### (Preparation Example 2: Preparation of Curing Catalyst (C-2))

A curing catalyst (C-2) was obtained in the same manner as in Preparation Example 1, except that the amount of DICNATE 425 used in Preparation Example 1 was changed from 1.1 g to 0.6 g. The molar ratio (c1/c2) was 0.05.

### (Preparation Example 3: Preparation of Curing Catalyst (C-3))

A curing catalyst (C-3) was obtained in the same manner as in Preparation Example 1, except that the amount of DICNATE 425 used in Preparation Example 1 was changed from 1.1 g to 0.4 g. The molar ratio (c1/c2) was 0.033.

### (Preparation Example 4: Preparation of Curing Catalyst (C-4))

A curing catalyst (C-4) was obtained in the same manner as in Preparation Example 1, except that DICNATE 425 used in Preparation Example 1 was changed from 1.1 g to 1.4 g and DBU was changed to DBN. The molar ratio (c1/c2) was 0.1.

### (Preparation Example 5: Preparation of Curing Catalyst (C-5))

A curing catalyst (C-5) was obtained in the same manner as in Preparation Example 1, except that DICNATE 425 used in Preparation Example 1 was changed from 1.1 g to 0.7 g and DBU was changed to DBN. The molar ratio (c1/c2) was 0.05.

### (Preparation Example 6: Preparation of Curing Catalyst (RC-1))

A curing catalyst (RC-1) was obtained in the same manner as in Preparation Example 1, except that the amount of DICNATE 425 used in Preparation Example 1 was changed from 1.1 g to 11 g. The molar ratio (c1/c2) was 1.

### (Preparation Example 7: Preparation of Curing Catalyst (RC-2))

A curing catalyst (RC-2) was obtained in the same manner as in Preparation Example 1, except that the amount of DICNATE 425 used in Preparation Example 1 was changed from 1.1 g to 0.2 g. The molar ratio (c1/c2) was 0.02.

### (Example 1: Preparation and Evaluation of Curable Composition (1))

A curable resin composition (1) was obtained by blending 30.0 g of the solution of acrylic polymer (A-1) obtained in Synthesis Example 1, 10.7 g of polyisocyanate ("SUMIDUR N-3300" manufactured by Sumika Covestro Urethane Co., Ltd., hexamethylene diisocyanurate-type polyisocyanate), and 0.067 g of the curing catalyst (C-1).

### (Examples 2 to 5: Preparation and Evaluation of Curable Compositions (2) to (5))

Curable compositions (2) to (5) were obtained in the same manner as in Example 1 except that the curing catalyst blended was changed as listed in Table 1.

### (Comparative Examples 1 to 6: Preparation and Evaluation of Curable Compositions (R1) to (R6))

Curable compositions (R1) to (R6) were obtained in the same manner as in Example 1 except that the curing catalyst blended was changed as listed in Table 2.

### [Preparation of Coating Material]

To each of the curable compositions obtained above, a mixed solvent (butyl acetate/propylene glycol monomethyl ether acetate/ethyl 3-ethoxypropionate = 60/30/10 (mass ratio)) was added, and the viscosity was adjusted to about 14 seconds with an NK-2 Iwata viscosity cup (manufactured by Anest Iwata Corporation). Mixing in a paint conditioner for 1 hour resulted in a coating material.

### [Evaluation of Usable Time]

The initial viscosity (in seconds) of the coating material obtained above immediately after blending and the viscosity (in seconds) after storage at 23°C for 2 hour were measured with an NK-2 Iwata viscosity cup (manufactured by Anest Iwata Corporation), and the usable time was evaluated according to the following criteria. The viscosity at 23°C was measured.
A: After 2 hour, flowable and viscosity is less than twice the initial viscosity.
B: After 2 hour, flowable but viscosity is two or more times and less than three times the initial viscosity.
C: After 2 hour, flowable but viscosity is three or more times the initial viscosity.
D: After 2 hour, not flowable.

### [Production of Cured Coating Film]

The coating materials obtained above were applied to substrates (ABS and PP) by using an 8 mil applicator. The applied coating materials were then allowed to stand for 10 minutes, dried at 80°C for 30 minutes, and further allowed to stand at 23°C for 2 hours to obtain cured coating films on the substrates. The film thickness was 30 µm.

### [Evaluation of Curability]

Masking tape ("Masking Tape No. 243J Plus" manufactured by 3M) was applied to the coated surface of the test substrate obtained above and left at 23°C for 1 hour. After that, the masking tape was removed and the degree of adhesive residue on the coating film was visually checked to evaluate the curability according to the following criteria.
A: No adhesive residue
B: Slightly visible adhesive residue
C: Clearly visible adhesive residue
D: Very clearly visible adhesive residue

### [Evaluation of Solvent Resistance]

A drop of xylene was put on the cured coating film obtained above with a 2-mL poly dropper and left at 23°C for 1 minute, and then the xylene was wiped off with a soft cloth. The appearance of the coating film was evaluated by visual inspection according to the following criteria.
A: No trace left
B: Trace left on part of the coating film
C: Trace left on the entire coating film
D: Coating film dissolved, substrate exposed

The blend compositions and evaluation results of the curable compositions (1) to (5) and (R1) to (R4) obtained above are listed in Tables 1 and 2.

**[Table 1]**

| Table 1 | | | Ex. 1 | Ex. 2 | Ex. 3 | Ex. 4 | Ex. 5 |
|---|---|---|---|---|---|---|---|
| Curable composition | | | (1) | (2) | (3) | (4) | (5) |
| Composition (parts by mass) | Solution of acrylic polymer (A-1) having hydroxy group (nonvolatile content 75% by mass) | | 30.0 | 30.0 | 30.0 | 30.0 | 30.0 |
| | Polyisocyanate compound (B-1) | | 10.7 | 10.7 | 10.7 | 10.7 | 10.7 |
| | Curing catalyst (C-1) | | 0.067 | | | | |
| | | molar ratio (c1/c2): 0.1 | | | | | |
| | Curing catalyst (C-2) | | | 0.111 | | | |
| | | molar ratio (c1/c2): 0.05 | | | | | |
| | Curing catalyst (C-3) | | | | 0.154 | | |
| | | molar ratio (c1/c2): 0.033 | | | | | |
| | Curing catalyst (C-4) | | | | | 0.059 | |
| | | molar ratio (c1/c2): 0.1 | | | | | |
| | Curing catalyst (C-5) | | | | | | 0.095 |
| | | molar ratio (c1/c2): 0.05 | | | | | |
| Evaluation result | Usable time | | B | A | B | A | B |
| | Curability | | A | B | A | B | B |
| | Solvent resistance | | B | A | A | B | A |

**[Table 2]**

| Table 2 | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Curable composition | | | (R1) | (R2) | (R3) | (R4) | (R5) | (R6) |
| Composition (parts by mass) | Solution of acrylic polymer (A-1) having hydroxy group (nonvolatile content 75% by mass) | | 30.0 | 30.0 | 30.0 | 30.0 | 30.0 | 30.0 |
| | Polyisocyanate compound (B-1) | | 10.7 | 10.7 | 10.7 | 10.7 | 10.7 | 10.7 |
| | Curing catalyst (C-2) | | | | | | 0.300 | 0.005 |
| | | molar ratio (c1/c2): 0.05 | | | | | | |
| | DICNATE 425 | | 0.060 | | | | | |
| | DBU | | | 0.087 | | | | |
| | Curing catalyst (RC-1) | | | | 0.028 | | | |
| | Curing catalyst (RC-2) | | | | | 0.241 | | |
| Evaluation result | Usable time | | D | A | D | C | D | A |
| | Curability | | A | C | C | A | A | D |
| | Solvent resistance | | A | C | C | A | B | D |

From the evaluation results of Examples 1 to 5, it was confirmed that the curable compositions of the present invention are excellent in usable time, curability, and solvent resistance.

On the other hand, Comparative Example 1 is an example that does not contain the amidine compound (c2) in the curing catalyst, and it was confirmed that the usable time was insufficient.

Comparative Example 2 is an example that does not contain the bismuth compound (c1) in the curing catalyst, and it was confirmed that the curability and solvent resistance were insufficient.

Comparative Example 3 is an example in which the molar ratio (c1/c2) of the bismuth compound (c1) to the amidine compound (c2) is greater than 0.5, which is the upper limit of the present invention, and it was confirmed that the usable time, curability, and solvent resistance were insufficient.

Comparative Example 4 is an example in which the molar ratio (c1/c2) of the bismuth compound (c1) to the amidine compound (c2) is smaller than 0.025, which is the lower limit of the present invention, and it was confirmed that the usable time was insufficient.

Comparative Example 5 is an example in which the content of the curing catalyst (C) relative to the acrylic polymer (A) having a hydroxy group is greater than 0.8% by mass, which is the upper limit of the present invention, and it was confirmed that the usable time was insufficient.

Comparative Example 6 is an example in which the content of the curing catalyst (C) relative to the acrylic polymer (A) having a hydroxy group is smaller than 0.05% by mass, which is the lower limit of the present invention, and it was confirmed that the curability and solvent resistance were insufficient.

## Claims

1. A curable composition comprising an acrylic polymer (A) having a hydroxy group, a polyisocyanate compound (B), and a curing catalyst (C), wherein
the curing catalyst (C) is derived from a bismuth compound (c1) and an amidine compound (c2), a content of the curing catalyst (C) is 0.05 to 0.8% by mass relative to the copolymer (A), and a molar ratio (c1/c2) of the bismuth compound (c1) to the amidine compound (c2) is 0.025 to 0.5.

2. The curable composition according to claim 1, wherein the bismuth compound (c1) is a fatty acid bismuth complex.

3. The curable composition according to claim 1, wherein the amidine compound (c2) is a bicyclic amidine compound.

4. The curable composition according to claim 1, wherein the polyisocyanate compound (B) comprises a compound having three or more isocyanate groups in a molecule.

5. A cured product of the curable composition according to any one of claims 1 to 4.
